# EUROPÄISCHE PATENTSCHRIFT

(11) **EP 1 099 063 B1**
(45) Veröffentlichungstag und Bekanntmachung des Hinweises auf die Patenterteilung: **17.03.2004**
(21) Anmeldenummer: 99968317.0
(22) Anmeldetag: 18.12.1999
(51) Int. Cl.: F16H 1/32, H02K 7/116

(54) **MOTOR-GETRIEBE-EINHEIT**
ENGINE-TRANSMISSION UNIT
BLOC-MOTEUR

(30) Priorität: 25.05.1999 DE 19923877
(43) Veröffentlichungstag der Anmeldung: 16.05.2001
(73) Patentinhaber: ROBERT BOSCH GMBH, 70442 Stuttgart (DE)
(72) Erfinder: MOSKOB, Frank, D-77815 Buehl (DE)
(86) Internationale Anmeldenummer: PCT/DE1999/004044
(87) Internationale Veröffentlichungsnummer: WO 2000/071908

(56) Entgegenhaltungen:
- WO-A-99/39114
- DE-A- 19 729 620
- DE-C- 19 618 248
- US-A- 4 228 698
- US-A- 5 479 058

## Beschreibung

### Stand der Technik

Die Erfindung betrifft eine Motor-Getriebe-Einheit mit einem von einem Drehantrieb angetriebenen Exzenterzahnradgetriebe nach der Gattung des Hauptanspruchs.

Zur Drehzahlreduzierung von Stellmotoren mit einer Ankerdrehzahl von etwa 7000 Umdrehungen pro Minute werden häufig Schneckengetriebe eingesetzt. Diese Schneckengetriebe, die von Elektromotoren angetrieben werden, zeichnen sich dadurch aus, daß sie eine Selbsthemmung von der Abtriebsseite her aufweisen. Wegen des zur Erzielung ausreichender Drehmomente notwendigen großen Übersetzungsverhältnisses, beispielsweise zum Antrieb als Fensterheber oder eines Schiebedaches in einem Kraftfahrzeug, sind die Außenabmessungen eines aus Motor und nebenliegend angeordneten Getriebe bestehenden Verstellmotors beträchtlich.

Die gattungsgemäße US 4,228,698 beschreibt ein Reduktionsgetriebe, das am Ende einer Abtriebswelle eines Elektro- oder Hydraulikmotors angeordnet ist. Das Reduktionsgetriebe weist ein auf einem Exzenter gelagertes Exzenterrad auf, das mittels Führungselementen, die mit einer Zwischenplatte wechselwirken, an einer Eigenrotation gehindert wird.

Die US 5,479,058 zeigt einen Elektromotor mit integrierten Getriebe, bei dem der Rotor als Innenexzenter ausgebildet ist, der ein Innenzahnrad dazu veranlasst, sich auf einem feststehenden Außenzahnrad abzuwälzen.

Andere Getriebearten sind beispielsweise aus der
DE 196 18 248 bekannt, die in sogenannten Trommelmotoren Verwendung finden. Diese Trommelmotoren weisen ein rohrförmiges Motorgehäuse auf, die einen Trommelanker mit nachfolgend angeordnetem Exzenterzahnradgetriebe umfassen. Die Verwendung von Exzenterzahnradgetrieben ist vorteilhaft, weil sie bei sehr kompakten Abmessungen eine Selbsthemmung und einen einfachen Aufbau aufweisen. Gegenüber den bekannten Schneckengetrieben ist das Exzenterzahnradgetriebe vergleichsweise toleranzunempfindlich, da alle rotierenden Teile auf einer Achse gelagert sind.

Die Anordnung des Exzenterzahnradgetriebes bei dem in der DE 196 18 248 beschriebenen Trommelmotor ist jedoch so getroffen, daß auch bei dieser Motor-Getriebe-Einheit vergleichsweise große Abmessungen vorliegen. Sie eignet sich nicht für Anwendungsgebiete mit stark beschränktem Montageraum, beispielsweise für Schiebedächer oder für Fensterhebersysteme in Kraftfahrzeugen.

### Vorteile der Erfindung

Die erfindungsgemäße Motor-Getriebe-Einheit mit den Merkmalen des Hauptanspruchs hat den Vorteil einer äußerst hohen Kompaktheit, weil das Exzenterzahnradgetriebe in einem freien Bauraum des Drehantriebs angeordnet ist. Durch die Integration des Getriebes in den Antrieb wird die Baulänge der Einheit erheblich reduziert und kann im Vergleich zu deren Durchmesser sehr klein gewählt werden.

Ein weiterer Vorteil der erfindungsgemäßen Integration des Getriebes liegt darin, daß während des Betriebs auftretende Unwuchtkräfte am Exzenterrad sehr einfach und genau durch entsprechende Gegengewichte am Drehantrieb auszugleichen sind.

Durch die in den Unteransprüchen aufgeführten Merkmale sind vorteilhafte Weiterbildungen der Motor-Getriebe-Einheit nach dem Hauptanspruch möglich.

Eine besonders kompakte Bauweise der erfindungsgemäßen Motor-Getriebe-Einheit wird dadurch erreicht, daß das Exzenterzahnradgetriebe vom Rotor des Drehantriebs umgeben ist. Dabei wird der Innendurchmesser des Rotors so groß gewählt, daß das Getriebe innerhalb dieses Durchmessers Platz findet. Das Getriebe läßt sich somit vollständig in den Antrieb einsetzen und man erreicht eine besonders vorteilhafte, flache Ausführung.

Vorteilhaft ist erfindungsgemäß vorgesehen, daß der mindestens eine Führungsbolzen, der die Exzenterbewegung des Exzenterrades gewährleistet und eine unerwünschte Verdrehung des Exzenterrades verhindert, auf einem Gehäuseteil angeordnet ist, das den freien Bauraum des Drehantriebs von dem Drehantrieb trennt. Damit können auch die Führungsbolzen, die für den Betrieb des Exzenterzahnradgetriebes notwendig sind und das Exzenterrad in vorteilhafter Weise führen, in die Motor-Getriebe-Einheit integriert werden.

Wenn dieser mindestens eine Führungsbolzen in eine vorzugsweise kreisförmige Aussparung am Exzenterrad ragt, dann wird die Exzenterbewegung des Exzenterrades gewährleistet, gleichzeitig jedoch eine Verdrehung des Exzenterrades verhindert.

Entspricht die lichte Weite der vorzugsweise kreisförmigen Aussparung im Exzenterrad der zweifachen Exzentrizität des Exzenters, dann kann sich der mindestens eine Führungsbolzen an der Wandung der Aussparung abwälzen und der gewünschte Führungseffekt wird in optimaler Weise ermöglicht.

Vorteilhaft ist weiterhin, wenn auf dem Gehäuseteil mehrere Führungsbolzen symmetrisch um das Exzenterrad angeordnet sind. Es hat sich in der Praxis herausgestellt, daß eine gleichmäßige Abtriebsdrehzahl durch mindestens drei im Winkel von 120° zueinander versetzte Bolzen erreicht wird. Erhöht man die Anzahl der Bolzen weiter, dann verbessert sich nicht nur der Gleichlauf der Motor-Getriebe-Einheit sondern es werden auch die im Betrieb wirkenden Kräfte und somit die mechanischen Belastungen gleichmäßig auf die einzelnen Bolzen verteilt.

Das abschnittsweise Ineinandergreifen des Exzenterrades mit dem Mitnehmer wird in vorteilhafter Weise dadurch erreicht, daß das Exzenterrad eine Innenverzahnung und der Mitnehmer eine Außenverzahnung aufweist.

In einer besonders vorteilhaften Variante ist der Drehantrieb ein elektronisch kommutierter Motor.

Ist der Exzenter weiterhin direkt an den Rotor angeformt, dann lassen sich beide Bauteile in vorteilhafter Weise einstückig herstellen.

### Zeichnung

In der Zeichnung ist ein Ausführungsbeispiel einer erfindungsgemäßen Motor-Getriebe-Einheit dargestellt und in der nachfolgenden Beschreibung näher erläutert.

Es zeigen
Figur 1 eine Motor-Getriebe-Einheit im Längsschnitt,
Figur 2 den vergrößerten Bereich II aus Figur 1 und
Figur 3 eine Darstellung verschiedener Betriebszustände.

### Beschreibung des Ausführungsbeispiels

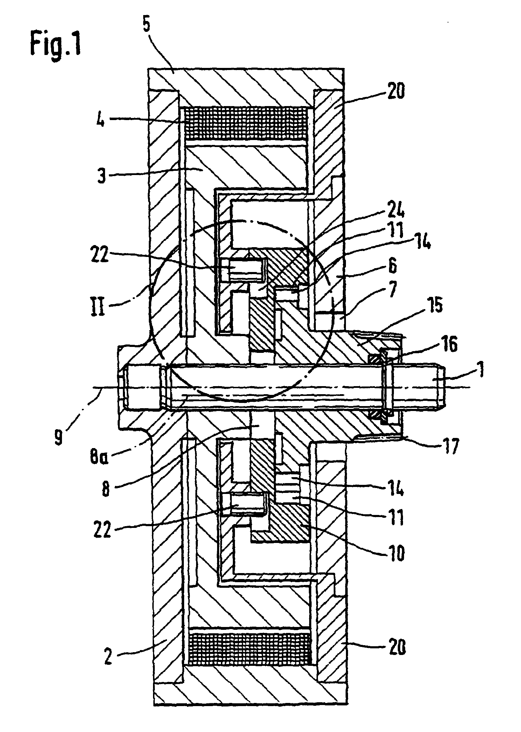

Das in Figur 1 dargestellte Ausführungsbeispiel einer erfindungsgemäßen Motor-Getriebe-Einheit zeigt einen Elektromotor mit einem Exzenterzahnradgetriebe, das eine Achse 1 aufweist, welche in einem Gehäuseboden 2 drehfest befestigt ist. Auf der Achse 1 ist ein Drehantrieb mit einem Rotor 3 drehbar angeordnet, der durch Spulen 4 des Elektromotors angetrieben wird. Die Spulen 4 sind in einem zylindrischen Gehäuseabschnitt 5 innenliegend angeordnet, wobei an dem Gehäuseabschnitt 5 auch der Gehäuseboden 2 befestigt ist. Auf der dem Gehäuseboden 2 gegenüberliegenden Seite am Gehäuseabschnitt 5 ist ein Gehäuseteil 6 in Form eines Deckels mit einer zentralen Öffnung 7 fest angebracht. Durch diese zentrale Öffnung 7 ragt das dem Gehäuseboden 2 abgewandte Ende der Achse 1.

Der Gehäuseabschnitt 5, der Gehäuseboden 2 und der Deckel 6 bilden ein Motorengehäuse, in dessen Inneren der auf der Achse 1 drehbare Rotor 3 angeordnet ist, der mit einem sich entlang der Mittelachse 9 axial erstreckendem Exzenter 8 mit einer Exzenterachse 8a versehen ist. Auf dem Exzenter 8 ist ein Exzenterrad 10 drehbar gelagert, welches mit einer Innenverzahnung 11 versehen ist.

Die Innenverzahnung 11 des Exzenterrades 10 greift abschnittsweise in eine Außenverzahnung 14 eines Mitnehmers 15 ein, der drehbar auf der Achse 1 gelagert und mit Befestigungsmitteln 15 axial befestigt ist. Der Mitnehmer 15 ragt durch das Gehäuseteil 6 hindurch aus dem Motorengehäuse heraus und ist in diesem Bereich für den Getriebeausgang mit einer weiteren Außenverzahnung 17 versehen.

Die Ausführung des in Figur 1 dargestellten Drehantriebs 3 bewirkt, daß innerhalb des Drehantriebs 3 ein freier Bauraum entsteht, in den das Exzenterzahnradgetriebe integriert ist. Der Antrieb und das Getriebe sind auf der gemeinsamen Achse 1 gelagert.

Zur räumlichen Trennung des freien Bauraums vom Motorenbereich ist ein Getriebegehäuseteil 20 vorgesehen, auf dem die Führungsbolzen 22 für das Exzenterrad 10 fest angeordnet sind. Die Führungsbolzen 22 ragen in Aussparungen 24, die kreisförmig ausgeführt und in das Exzenterrad 10 eingearbeitet sind.

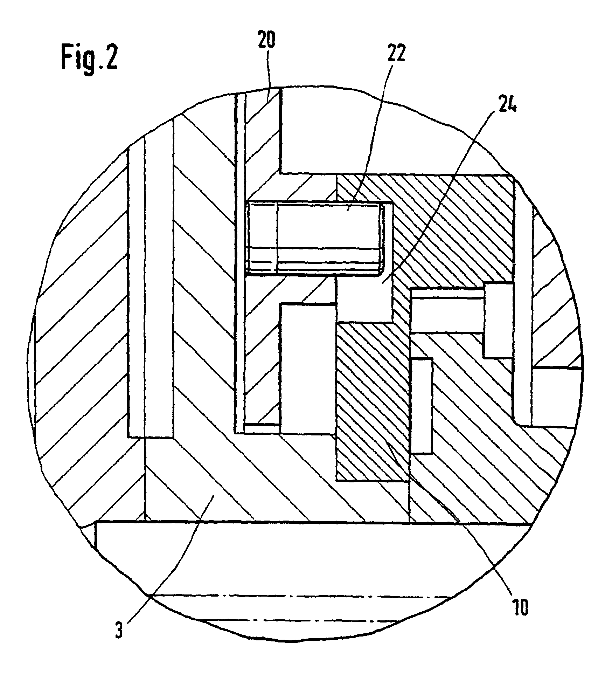

Die Merkmale, die den Führungsbolzen 22 betreffen, sind der besseren Übersichtlichkeit halber noch einmal in vergrößerter Darstellung in Figur 2 dargestellt. In dieser Figur 2 sind wie in allen anderen Figuren die gleichen Merkmale mit den gleichen Bezugszeichen versehen.

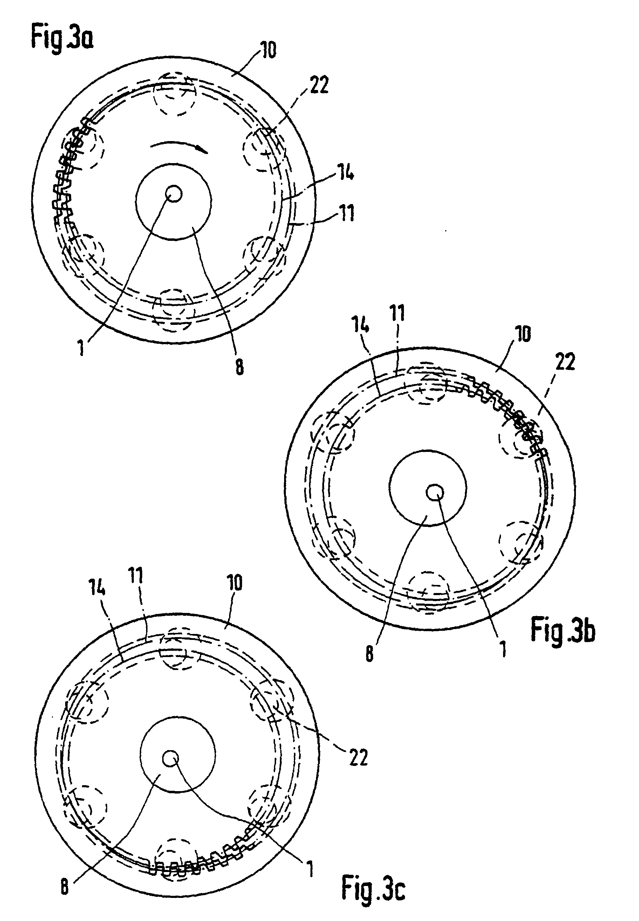

In den Figuren 3a bis c sind drei verschiedene Betriebspositionen des Exzenterzahnrades dargestellt. Zum Verständnis dieser Figuren sei noch einmal kurz die prinzipielle Wirkungsweise eines Exzenterzahnradgetriebes erläutert.

Durch das in den Spulen 4 der Figur 1 induzierte Magnetfeld dreht sich der Rotor 3 um die Achse 1, die mit dem Gehäuseboden 2 drehfest verbunden ist. Durch die Drehung des Rotors 3 dreht sich auch der Exzenter 8 um die Achse 1.

Das auf dem Exzenter 8 drehbar gelagerte Exzenterrad 10 würde sich mit seiner Innenverzahnung 11 an der Außenverzahnung des Mitnehmers 15 abwälzen, kann selbst aber - bedingt durch die Führung der Führungsbolzen 22 - keine Drehung um sich selbst ausführen. Somit wälzt sich der ebenfalls drehbar mit der Achse 1 verbundene Mitnehmer 15 mit seiner Verzahnung 14 auf der Innenverzahnung 11 ab. Durch dieses Abwälzen des Mitnehmers 15 in dem Exzenterrad 10 erzielt man eine Untersetzung der Drehbewegung des Mitnehmers 15, die über die Außenverzahnung 17 des Mitnehmers 15 weitergeleitet wird.

Das Exzenterrad 10 vollführt folglich eine Kreisbewegung, die von den Führungsbolzen 22 gestattet wird, weil die Führungsbolzen 22 in den kreisförmigen Aussparungen 24 des Exzenterrades 10 geführt sind.

Wenn der Durchmesser der kreisförmigen Aussparungen 24 im Exzenterrad 10 der zweifachen Exzentrizität des Exzenters 8 entsprechen, dann können sich die Führungsbolzen 22 in idealer Weise an der Innenfläche der kreisförmigen Aussparungen 24 abwälzen. Dies ermöglicht das Abwälzen des Mitnehmers 15 in dem Exzenterrad 10, was in den Figuren 3a bis c bei für die drei verschiedenen Positionen bei jeweils 0°, 120° und 240° dargestellt ist.

Die erfindungsgemäße Motor-Getriebe-Einheit ist natürlich nicht auf das beschriebene Ausführungsbeispiel beschränkt, entscheidend ist, daß das Exzenterzahnradgetriebe in den freien Bauraum des Antriebs integriert ist, womit eine besonders flache und kompakte Bauweise erreicht wird.

## Patentansprüche

1. Motor-Getriebe-Einheit
- mit einem von einem Drehantrieb angetriebenen Exzenterzahnradgetriebe, das einen vom Drehantrieb angetriebenen Exzenter (8), ein auf diesem drehbar gelagertes Exzenterrad (10) und einen abtriebsseitigen Mitnehmer (15) aufweist, wobei der Mitnehmer (15) durch abschnittsweises Ineinandergreifen mit dem Exzenterrad (10) zusammenwirkt und wobei der Drehantrieb innerhalb eines Gehäuses angeordnet ist,
- weiterhin mit mindestens einem mit dem Exzenterrad (10) zusammenwirkenden Führungsbolzen (22), der auf einem Gehäuseteil (20) des Gehäuses angeordnet ist und der die Exzenterbewegung des Exzenterrades (10) gewährleistet sowie eine unerwünschte Verdrehung des Exzenterrades (10) verhindert,
**dadurch gekennzeichnet,**
- **daß** der Exzenter (8) von einem Rotor (3) des Drehantriebs angetrieben ist, wobei das Exzenterzahnradgetriebe von dem Rotor umgeben ist, und
- **daß** das Gehäuseteil (20) einen freien Bauraum des Gehäuses, in dem das Exzenterzahnradgetriebe angeordnet ist, vom Rotor des Drehantriebs trennt.

2. Motor-Getriebe-Einheit nach Anspruch 1, **dadurch gekennzeichnet, daß** der mindestens eine Führungsbolzen (22) in eine Aussparung (24) am Exzenterrad (10) ragt , welche vorzugsweise kreisförmig ist.

3. Motor-Getriebe-Einheit nach Anspruch 2, **dadurch gekennzeichnet, daß** die lichte Weite der Aussparung (24) im Exzenterrad (10) der zweifachen Exzentrizität des Exzenters (8) entspricht.

4. Motor-Getriebe-Enheit nach einem der Ansprüche 1 bis 3, **dadurch gekennzeichnet, daß** auf dem Gehäuseteil (20) mehrere Führungsbolzen (22), vorzugsweise symmetrisch um das Exzenterrad (10), angeordnet sind.

5. Motor-Getriebe-Einheit nach einem der Ansprüche 1 bis 4, **dadurch gekennzeichnet, daß** das Exzenterrad (10) eine Innenverzahnung (11) aufweist.

6. Motor-Getriebe-Einheit nach einem der Ansprüche 1 bis 7, **dadurch gekennzeichnet, daß** der Mitnehmer (15) eine Außenverzahnung (14) aufweist.

7. Motor-Getriebe-Einheit nach einem der vorhergehenden Ansprüche, **dadurch gekennzeichnet, daß** der Drehantrieb ein elektronisch kommutierter Motor ist.

8. Motor-Getriebe-Einheit nach einem der vorhergehenden Ansprüche, **dadurch gekennzeichnet, daß** der Exzenter (8) direkt am Rotor (3) angeformt ist.

## Claims

1. Engine/transmission unit,
- with an eccentric-gearwheel transmission which is driven by a rotary drive and which has an eccentric (8) driven by the rotary drive, an eccentric wheel (10) rotatably mounted on the said eccentric, and an output-side driver (15), the driver (15) co-operating with the eccentric wheel (10) by partial intermeshing, and the rotary drive being arranged within the housing,
- furthermore with at least one guide bolt (22) which co-operates with the eccentric wheel (10) and is arranged on a housing part (20) of the housing and which ensures the eccentric movement of the eccentric wheel (10) and prevents an undesirable rotation of the eccentric wheel (10),
**characterized**
- **in that** the eccentric (8) is driven by a rotor (3) of the rotary drive, the eccentric-gearwheel transmission being surrounded by the rotor, and
- **in that** the housing part (20) separates a free construction space of the housing, in which construction space the eccentric-gearwheel transmission is arranged, from the rotor of the rotary drive.

2. Engine/transmission unit according to Claim 1, **characterized in that** the at least one guide bolt (22) projects into a clearance (24) on the eccentric wheel (10), the said clearance preferably being circular.

3. Engine/transmission unit according to Claim 2, **characterized in that** the clear width of the clearance (24) in the eccentric wheel (10) corresponds to double the eccentricity of the eccentric (8).

4. Engine/transmission unit according to one of Claims 1 to 3, **characterized in that** a plurality of guide bolts (22) are arranged, preferably symmetrically around the eccentric wheel (10), on the housing part (20).

5. Engine/transmission unit according to one of Claims 1 to 4, **characterized in that** the eccentric wheel (10) has an internal toothing (11).

6. Engine/transmission unit according to one of Claims 1 to 7, **characterized in that** the driver (15) has an external toothing (14).

7. Engine/transmission unit according to one of the preceding claims, **characterized in that** the rotary drive is an electronically commutated motor.

8. Engine/transmission unit according to one of the preceding claims, **characterized in that** the eccentric (8) is integrally formed directly on the rotor (3).

## Revendications

1. Bloc-moteur comprenant :
- un entraînement de roue dentée d'excentrique entraîné par un entraînement en rotation, qui présente un excentrique (8) entraîné par l'entraînement en rotation, une roue d'excentrique (10) disposée libre en rotation sur celui-ci, et un entraîneur (15) se trouvant du côté de l'entraînement, l'entraîneur (15) coopérant par des prises par segments avec la roue d'excentrique (10), l'entraînement en rotation étant disposé à l'intérieur d'un boîtier,
- de plus au moins un goujon de guidage (22) coopérant avec la roue d'excentrique (10) est disposé sur une partie de boîtier (20) du boîtier et qui permet le déplacement excentrique de la roue d'excentrique (10) en évitant une rotation non désirée de la roue d'excentrique (10),
**caractérisé en ce que**
- l'excentrique (8) est entraîné par un rotor (3) de l'entraînement en rotation, l'entraînement de roue dentée d'excentrique étant entouré par le rotor, et
- la partie de boîtier (20) séparant un espace de construction libre du boîtier dans lequel la roue dentée d'entraînement d'excentrique est disposée séparément.

2. Bloc-moteur selon la revendication 1,
**caractérisé en ce qu'**
au moins l'unique goujon de guidage (22) vient en saillie dans un évidement (24) de la roue d'excentrique (10) qui est de préférence circulaire.

3. Bloc-moteur selon la revendication 2,
**caractérisé en ce que**
la faible largeur de l'évidement (24) dans la roue d'excentrique (10) correspond à deux fois l'excentricité de l'excentrique (8).

4. Bloc-moteur selon l'une quelconque des revendications 1 à 3,
**caractérisé en ce que**
plusieurs goujons de guidage (22) sont disposés sur la partie de boîtier (20) de préférence symétriquement autour de la roue d'excentrique (10).

5. Bloc-moteur selon l'une quelconque des revendications 1 à 4,
**caractérisé en ce que**
la roue d'excentrique (10) présente une denture intérieure (11).

6. Bloc-moteur selon l'une quelconque des revendications 1 à 7,
**caractérisé en ce que**
l'entraîneur (15) présente une denture extérieure (14).

7. Bloc-moteur selon l'une quelconque des revendications précédentes,
**caractérisé en ce que**
l'entraînement en rotation est un moteur commuté électroniquement.

8. Bloc-moteur selon l'une quelconque des revendications précédentes,
**caractérisé en ce que**
l'excentrique (8) est formé directement sur le rotor (3).
